# EUROPEAN PATENT APPLICATION

(11) **EP 4 744 928 A1**
(43) Date of publication of application: **20.05.2026**
(21) Application number: 25212990.3
(22) Date of filing: 03.11.2025
(51) Int. Cl.: B60K 28/06

(54) **DRIVER MONITORING AND DISTRACTION MITIGATION SYSTEM AND METHOD**

(30) Priority: 13.11.2024 US 202418946178
(71) Applicant: Harman International Industries, Incorporated, Stamford, Connecticut 06901 (US)
(72) Inventor: CHEN, Zhijun, Kanagawa, 215-0023 (JP)
(74) Representative: Kraus & Lederer PartGmbB

(57) **Abstract**

In at least one embodiment, a system for monitoring driver behavior is provided. The system includes a plurality of sensors and at least one controller. The plurality of sensors transmits a first signal indicative of whether a first driver is in a distracted state. The at least one controller is programmed to receive a first driver identity signal that identifies the first driver before receiving the first signal and to receive a first mitigation signal indicative of a first selected mitigation operation from a plurality of mitigation operations for the first driver. The at least one controller is further programmed to perform the first selected mitigation operation for the first driver in response to at least the first signal indicating that the first driver is in the distracted state.

## Description

### TECHNICAL FIELD

Aspects disclosed herein generally relate to a driver monitoring and mitigation system and method. These aspects and others will be discussed in more detail herein.

### BACKGROUND

A number of Original Equipment Manufactures (OEM) seek to reduce accidents that may be caused due to driver distraction and/or fatigue. In this case, it is desirable to provide a vehicle system that monitors driver behavior in addition. Similarly, it is desirable to provide a vehicle system that mitigates or prevents the vehicle from colliding with other vehicles or other items on the road due to such behavior.

### SUMMARY

In at least one embodiment, a system for monitoring driver behavior is provided. The system includes a plurality of sensors and at least one controller. The plurality of sensors transmits a first signal indicative of whether a first driver is in a distracted state. The at least one controller is programmed to receive a first driver identity signal that identifies the first driver before receiving the first signal and to receive a first mitigation signal indicative of a first selected mitigation operation from a plurality of mitigation operations for the first driver. The at least one controller is further programmed to perform the first selected mitigation operation for the first driver in response to at least the first signal indicating that the first driver is in the distracted state.

In at least one embodiment, a method for monitoring driver behavior is provided. The method includes transmitting a first signal indicative of whether a first driver is in a distracted state and receiving by at least one first controller, a first driver identity signal that identifies the first driver before receiving the first signal. The method further includes receiving a first mitigation signal indicative of a first selected mitigation operation from a plurality of mitigation operations for the first driver and performing the first selected mitigation operation for the first driver in response to at least the first signal indicating that the first driver is in the distracted state.

In at least one embodiment, a computer-program product embodied in a non-transitory computer read-able medium that is programmed and executable by one or more controllers to monitor driver behavior is provided. The computer-program product includes instructions for receiving a first driver identity signal that identifies a first driver for a vehicle and for receiving a first signal indicative of whether the first driver is in a distracted state. The computer-program product includes instructions for receiving a first mitigation signal indicative of a first selected mitigation operation from a plurality of mitigation operations for the first driver and for performing the first selected mitigation operation for the first driver in response to at least the first signal indicating that the first driver is in the distracted state.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
FIGURE 1 generally depicts one or more examples of a system for monitoring driver behavior;
FIGURE 2 generally depicts a vehicle system for monitoring driver behavior and for mitigating driver behavior in accordance with one or more embodiments;
FIGURE 3 depicts one or more detailed implementations of the vehicle system of FIGURE 2 in accordance with one or more embodiments; and
FIGURE 4 depicts a method for monitoring driver behavior and for mitigating driver behavior in accordance with one or more embodiments.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Generally, vehicle monitoring may involve monitoring driver eye distraction, drowsiness, and driver behavior in addition to various health conditions for the driver. Mitigation of various driver behavior may include utilizing temperature control to either warm up or cool down the cabin of the vehicle, opening a window to allow fresh air to enter into the cabin, triggering a visual alert on a display, generating audible alerts in which the tone and frequency may continue to increase over time while the driver is detected to be in a state of distraction. In another example, OEMs may define the manner in which driver distraction and mitigation operate in the vehicle. Additionally or alternatively, an end user (e.g., driver and/or occupant) may operate with an interface to control the mitigation of the vehicle (e.g., open one or more windows, activate air conditioning, display an image on the vehicle display (or on a display on a mobile phone), generate an audible warning).

Aspects disclosed herein generally provide a detection controller that may be used to provide a standardized mitigation detection scheme and a separate mitigation controller to provide mitigation efforts to keep the driver and passengers safe. Aspects disclosed herein generally provide both user configurable options that may be programmed for the detection controller and the mitigation controller. The disclosed vehicle system may allow the end user to select a preferred detection input and a corresponding level such as driver drowsiness (e.g., drowsiness level from slight to very sleepy/drowsy). For example, the disclosed vehicle system may enable the end user to set the mitigation aspect such as open a driver seat window (or passenger window) to a desired opening (e.g., 30% open), output the audible output at a desired volume/gain and/or duration, and or output a particular fragrance to alert the driver. It is recognized that these aspects may be configured or programmed to repeat any one or more of the foregoing aspects or simply perform the mitigation action once.

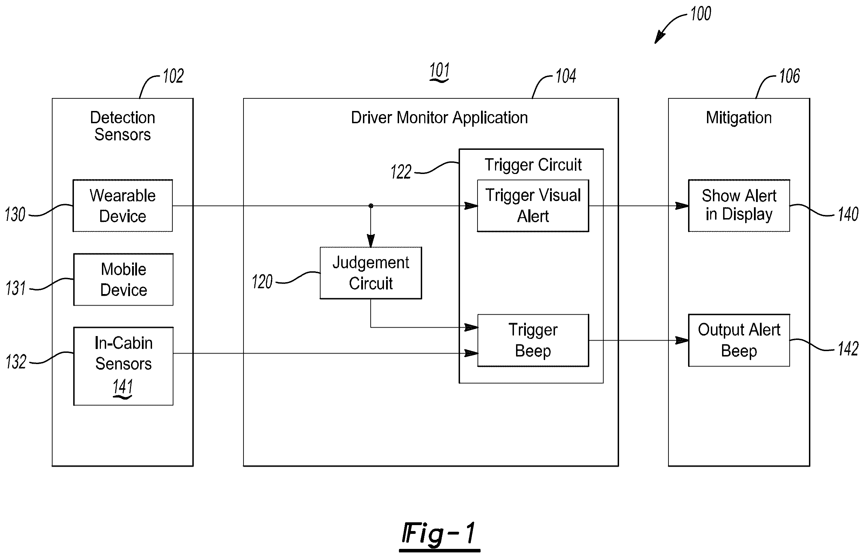

FIGURE 1 generally depicts one example of a system 100 for monitoring driver behavior in a vehicle 101. The system 100 includes a plurality of sensors 102, at least one first controller 104 (the "first controller 104"), and at least one second controller 106 (the "second controller 106" (or the mitigation controller 106)). Generally, the sensors 102 provides signals indicative of the state of the driver such as whether the driver is distracted and provides the same to the first controller 104. The first controller 104 determines whether the driver's behavior, based on the signals provided by the sensors 102, require for the vehicle 101 to initiate and execute mitigation actions to alert the driver to change his/her driving habits that may cause the vehicle 101 to contact an external object on the road.

In general, the plurality of sensors 102 may include a wearable device 130, a mobile device 131, and various in-cabin sensors 132. The wearable device 130 may include a smart watch that can monitor aspects related to vital sign sensing such as heart rate for the driver, sleep patterns for the driver, sleep durations for the driver, etc. The wearable device 130 may generally wirelessly communicate bi-directionally to one or more servers (not shown) positioned exterior to the vehicle 101 via Wi-Fi, LTE, etc. The in-cabin sensors 132 may include one or more cameras 141. The cameras 141 may include any number of in-ward facing cameras, eye gaze sensors, etc. In one example, the in-ward facing camera may be positioned within an interior of the vehicle 101 to capture images of the driver. In addition, the eye gaze sensor may also be positioned within the interior of the vehicle 101 to capture an eye gaze of the driver. Additionally or alternatively, the plurality of sensors 102 generally corresponds to device that are capable of detecting when the driver is in a distracted state and may include the noted devices above or in cabin monitor systems and so on.

The first controller 104 generally includes a judgement circuit 120 and a trigger circuit 122. The judgement circuit 120 may determine the length of time in which the driver fails to take a corrective action in mitigating an issue (e.g., driver distraction) and generates a control signal based on the delay in correcting the driver distraction. For example, in the event the judgement circuit 120 determines that the driver has failed to take a corrective action of the vehicle 101 (e.g., focus his/her eyes on the road, gain control of the vehicle 101, etc.) for a period of time that exceeds a first time period based on signals provided by the sensors 102, then the judgement circuit 120 transmits a first control signal to the second controller 106. In the event the judgement circuit 120 determines that the driver has failed to take a corrective action of the vehicle 101 (e.g., focus his/her eyes on the road, gain control of the vehicle 101, etc.) for a period of time that exceeds a second time period based on the signals provided by the sensors 102, then the judgement circuit 120 transmits a second control to the second controller 106. In general, the second time period may be greater than the first time period.

The second controller 106 may generate an alert for display at a location in the vehicle 101 in response to the first control signal. The visual alert 140, as generated by the second controller 106, generally serves to provide early notice to the driver to correct a driving pattern that may be distracting the driver. The audible alert 142, as generated by the second controller 106, generally serves to provide a more active alert (e.g., higher priority alert) to the driver to correct a driving pattern that may be distracting the driver to avoid a collision with another object on the road. The types of driver activities that are monitored in addition to the types of mitigation employed by the system 100 may be static and unable to change or be configured by the driver to account for specific instances in which the driver knows and recognizes may be a distraction for him/her.

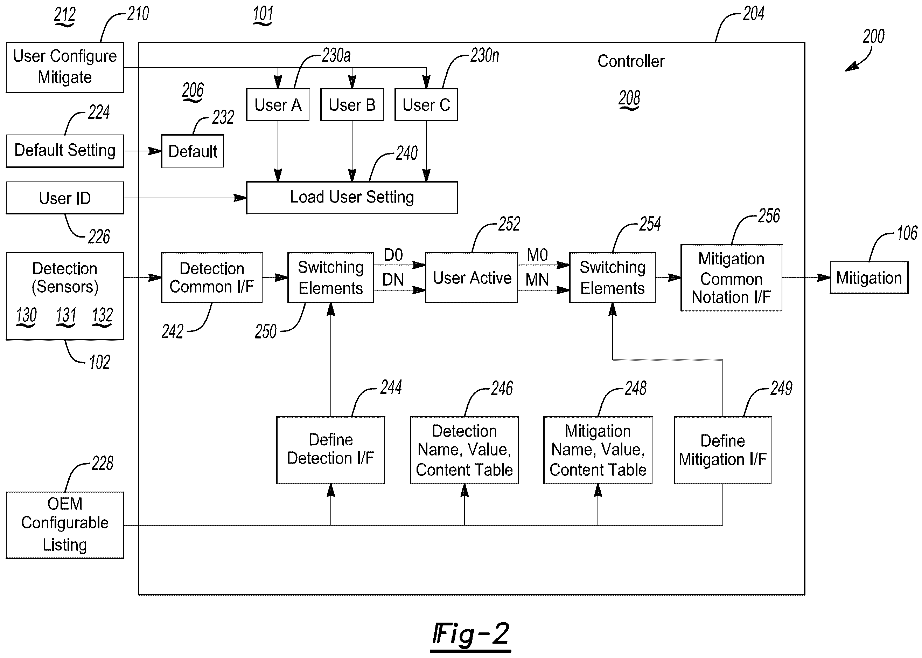

FIGURE 2 generally depicts a vehicle system 200 for monitoring driver behavior and for mitigating driver behavior in accordance with one embodiment. The vehicle system 200 includes the plurality of sensors 102, a first controller 204, and the second controller 106. In general, the system 200 may be arranged to operate in a similar manner to the vehicle system 100 as described in connection with FIGURE 1. However, the OEM or any other party may enable the driver to configure the driver monitoring and mitigation in manner that is suited based on the driver's needs and demands or personal situation. It is possible for the OEM or any other party to add or remove aspects related to the monitoring (or detection) and the mitigation without the need for a software change to the first controller 204 and the second controller 106. In general, the driver may provide user configure mitigate commands 210 to the first controller 204 via any one or more user interfaces (or human machine interfaces (HMIs) 212). In this regard, the user configured mitigate commands 210 enable the driver (or occupants) the ability to configure or establish one or more of various detection (or monitoring) items, sensitivity levels for various monitoring or mitigation operations, and the triggering of one or more mitigation operations. For example, the user may select, via the user interface(s) 212 to select a user preferred detection input, a user set preferred detection level, and/or a single mitigation method (e.g., a single mitigation operation that is performed to reduce the driver distraction) or a multi-mitigation operation (e.g., two or more mitigation operations to be performed to reduce driver distraction) based on preference.

The first controller 204 may include memory 206 to store any number of data blocks or features. It is recognized that the first controller 204 may include any number of processors 208 to co-act with and execute data (or instructions) stored on the memory 206 to execute any number of the operations noted herein performed by the first controller 204. The memory 206 includes a plurality of user storage blocks 230a - 230n to storing the user configure mitigate commands 210. It is recognized that the vehicle 101 generally includes any number of user interfaces 212 for providing the user configure mitigate commands 210 to the first controller 204. In addition, it is recognized that any number of users (e.g., drivers) of the vehicle 101 may provide a personalized listing of user configured mitigate commands 210 based on their preferences. For example, user A may provide corresponding user configured mitigate commands 210 to the memory 206 for storage on the user storage block 230a. In addition, user N may provide corresponding user configure mitigate commands to the memory 206 for storage on the user storage block 230n. The settings provided by the default settings for a single user from the default settings 224 may be loaded into a load user setting memory block 240 or conversely any one of the mitigation settings as selected by a particular user and loaded into a corresponding user storage block 230a - 230n may be stored into the load user setting memory block 240.

User ID information 226 may be provided to the first controller 204 to identify which driver is driving the vehicle 101 such that the appropriate/correct user configure mitigate commands 210 are executed by the first controller 204. The user ID information 226 may be provided based on radio frequency (RD) ID tags that are positioned on one or more vehicle keys 129 (not shown) which indicate the identity of the driver. Additionally or alternatively, the user ID information 226 may be provided by a mobile device 131 that belongs to the driver whereby the mobile device provides a signal that identifies the driver. It is recognized that driver may pair his/her key 129, mobile device 131, etc. with the first controller 204 to establish the identity of the driver. Additionally or alternatively, the user ID information 226 may be provided by way of outputs from an in-vehicle cabin monitoring system such as face ID (or face recognition), eye gaze ID, etc. A user setting memory block 240 may receive the user ID information 226. The first controller 204 executes instructions to load the appropriate user information from any one of the plurality of user storage blocks 230a - 230n and to execute the desired detection and mitigation schemes provided by the corresponding user.

Various default settings 224 may also be provided to the first controller 204. Such settings 224 may be OEM defined settings and may be stored on a default memory block 232. The various OEM defined settings 224 may be OEM suggested detection items and links to one or more mitigations features. The first controller 204 also includes a detection common interface 242. The detection common interface 242 receives signals from the plurality of sensors 102 that are indicative of the driver's level of distraction while driving the vehicle 101. In one example, the detection common interface 242 may store information (once processed by the first controller 204) which indicate event IDs and a corresponding value. For example, the event ID may correspond to any one of a drowsiness level, eye gaze, or eye close time event all of which provide information as to the driver's distraction level. The event value generally provides a value (e.g., 0 to 5) which indicates the level or severity of the event ID. The lower the level, the less the severity and the higher the level, the more severe the distraction may be. For example, for an eye close event where the driver's eyes are completely closed for a period that exceeds, for example, 6 seconds, this condition may correspond to a level of 5, etc. The cameras 141 may include a red, blue, green (RGB) camera or an RR camera to monitor a driver's face, and based on a virtual detection of the driver's face, and can provide images to the first controller 104 to determine the length of time that the driver's eyes are closed (e.g., eye close status). In addition, the one or more cameras 141 may provide images corresponding to breathing habits, mind distraction, stress, etc. to the first controller 104 to assess driver distraction.

The first controller 204 receives an OEM configurable listing 228. The listing 228 generally comprises a listing of configurable detection and mitigation features that may be established by the OEM and that are provided to the first controller 204. The first controller 204 includes a define detection interface 244, a detection content table 246, a mitigation content table 248, and a define mitigation interface 249. More specifically, the listing of configurable detection or mitigation features are provided to the define detection interface 244, the detection content table 246, the mitigation content table 248, and the define mitigation interface 249.

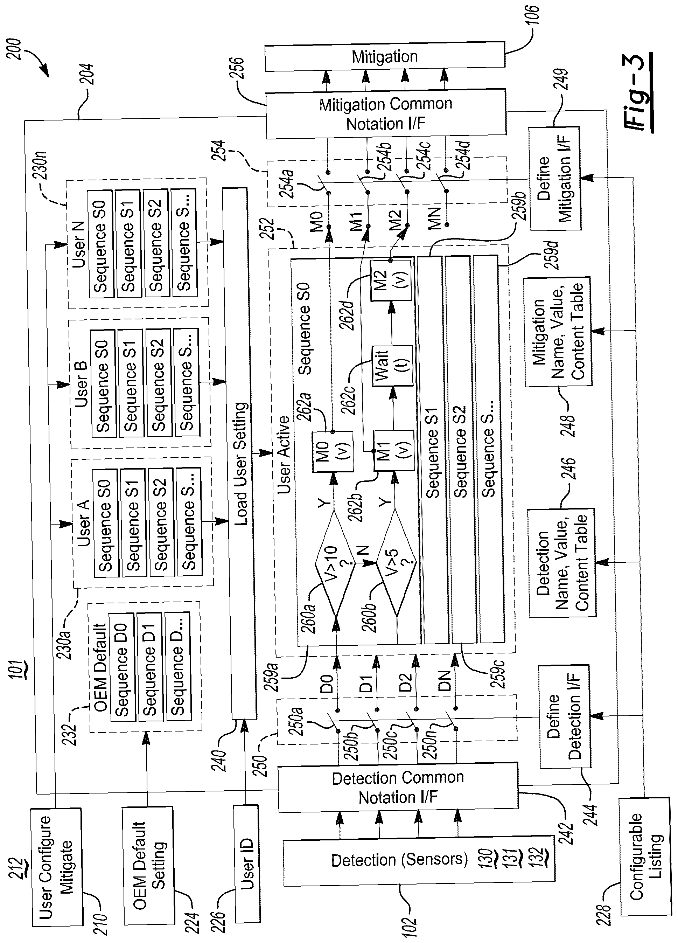

The first controller 204 also includes first switching elements 250, a user active block 252, and second switching elements 254. The define detection interface 244 provides the listing of configurable detection features to the first switching elements 250. Thus, in this regard the define detection interface 244 determines which detection features have been enabled based on the OEM configurable listing 228 and provides the same to the first switching elements 250. The switching elements 250 provide the detected features that the driver has engaged in based on those established by the configurable detection features and such detected features are provided to the user active block 252. This aspect will be discussed in more detail in connection with FIGURE 3. The detection content table 246 receives the configured (or enabled) detection features from the OEM configurable listing 228. The detection content table 246 may be defined by the OEM in which a detection ID is provided that corresponds to a detection aspect (e.g., sleepy level, driver distraction level, eye close time, etc.). Thus, the enabled detection features are given a detection ID in the detection content table 246. For example, the detection content table 246 may define ID_ 0 as "Sleepy Level", ID_1 as "Driver Distraction Level", ID_2 as Eye Close Time" and so on.

In a similar matter, the mitigation content table 248 may be defined by the OEM in which a mitigation ID is provided that corresponds to a mitigation aspect (e.g., open driver side window, play relaxing music, play a heavy alert audible signal, etc.). Thus, the enabled mitigation features are given a mitigation ID in the mitigation content table 248. For example, the mitigation content table 248 may define ID_ 0 as "Open Driver Side Window", ID_1 as "Play Relaxing Music", ID_2 as "Play a Heavy Alert Audible Signal" and so on. The define mitigation interface 249 provides the listing of configurable mitigation features to the first switching elements 254. Thus, in this regard the define mitigation interface 249 determines which mitigation features have been enabled based on the OEM configurable listing 228 and provides the same to the first switching elements 254. For example, the switching elements 254 provide the mitigation features based on those established by the configurable detection features and such mitigation features are provided to the mitigation common interface 256. This aspect will be discussed in more detail in connection with FIGURE 3.

The mitigation common interface 256 receives signals from the switching elements 254 that are indicative of the need to initiate the selected mitigation features due to the driver's detected driver's level of distraction being a concern while driving the vehicle 101. The mitigation common interface 256 provides control signals to the mitigation block 106 to activate the desired mitigation feature in order to gain the driver's attention and to take control of the vehicle to place in a safe mode.

FIGURE 3 depicts a more detailed implementation of the vehicle system 200 of FIGURE 2 in accordance with one embodiment. As shown, the default memory block 232 includes a number of sequence fields (e.g., D0 - DN) with each sequence field storing a corresponding OEM defined setting. Similarly, each user storage block 230a - 230n also includes a number of sequence fields (e.g.., D0 - Dn) with for storing various mitigation operations 210. Thus, user storage block 230a stores mitigation operations 210 as selected by a first user, user storage block 230b stores mitigation operations as selected by a second user and so on. The settings provided by the default settings 224 (e.g., OEM defined settings 224 may be OEM suggested detection items with links to one or more mitigations features) for a single user may be loaded into a load user setting 240 or conversely any one of the mitigation settings as selected by a particular user and loaded into a corresponding user storage block 230a - 230n may be stored into the load user setting 240. The settings stored in the load user setting memory block 240 may then be transmitted to the user active block 202.

The switching elements 250 include a plurality of switches 250a - 250n. The switches 250a - 250n. The define detection interface 244 provides the listing of configurable detection features to the switches 250a - 250n. As noted above, the define detection interface 244 determines which detection features have been enabled based on the OEM configurable listing 228 and provides the same to the switches 250a - 250n. The switches 250a - 250n provide the detected features that the driver has engaged in based on those established by the configurable detection features and such detected features are provided to the user active block 252. Each switch 250a - 250c that is activated (*i.e.,* closed) is based on the number of detection features that have been enabled based on the OEM configurable listing 228.

The user activate block 252 serves as an active setting device where data is provided thereto by the load user setting memory block 240. As noted above, the load user setting memory block 240 may provide the default settings 224 (e.g., OEM defined settings 224 may be OEM suggested detection items with links to one or more mitigations features) for a single user that may be loaded into a load user setting 240 or conversely any one of the mitigation settings as selected by a particular user and loaded into a corresponding user storage block 230a - 230n may be stored into the load user setting 240. In addition, any one or more switches 250a - 250d provide the detected features that the driver has engaged in, to the user activate block 252.

The user active block 252 includes a plurality of sequences 259a - 259d. For example, each switching element 250a - 250d provides a corresponding output to a corresponding sequence 259a - 259d, respectively. Each of the sequences 259a - 259d includes a plurality of decision circuits 260a - 260b and output registers 262a - 262d. Each of the decision circuits 260a - 260b includes a different predetermined threshold value for comparison to the detection events provided by each of the switches 250. For example, in connection with the output of switch 250a which indicates that a detection event has occurred, such an output is provided to the decision circuit 260a. The decision circuit 260a compares the number of instances in which the detection event has occurred to a first predetermined value (e.g., 10). If the number of instances in which the detection event has occurred is greater than the first predetermined value, then the decision circuit 260a provides an output to the output register 262 which is then fed to the second switching elements 254. For example, the second switching elements 254 includes a plurality of switches 254a - 254d. In this case, the output register 262a provides the output to the mitigation common interface 256 via the switch 254a where the mitigation common interface 256 controls the second controller 106 (or mitigation controller 106) to trigger a mitigation operation.

If on the other hand, the number of instances in which the detection event has occurred is less than the first predetermined value, then the decision circuit 260a provides the number of instances that the detection event has occurred to the decision circuit 260b. The decision circuit 260b compares the number of instances in which the detection event has occurred to a second predetermined value (e.g., 5). If the number of instances in which the detection event has occurred is greater than the second predetermined value, then the decision circuit 260a provides an output to the output register 262b where the user active block 252 provides an output to the mitigation common interface 256 which is then provided to the second controller 106 to trigger a first mitigation operation. In addition, the user active block 252 stores a value in output register 262c where a delay is triggered for a predetermined amount of time. Upon the delay expiring, the user active block 252 stores a value in the output register 262d where the user active block 252 provides another output to the mitigation common interface 256 which is then provided to the second controller 106 to trigger a second mitigation operation. It is recognized that the driver/user may program the first and/or second predetermined value as noted in connection with FIGURE 3. If the number of instances in which the detection event has occurred is less than the second predetermined value, then the system 200 may refrain from providing any of the mitigation operations. In general, the first and/or second predetermined values may be set by the OEM and/or by the driver/user. For the example illustrated in FIGURE 3, the driver may set a single mitigation operation to trigger when the number of instances in which the detection event has occurred is under 5. In addition, the driver may set a double mitigation operation to trigger when the number of instances in which the detection event has occurred is between 6 and 10.

In connection with the decision circuit 260b, the output provided by the user active block 252 to control the mitigation common interface 256 to trigger the mitigation is provided from the user active block 252 to the switch 254b and then to the second controller 106 via the mitigation common interface 256.

With respect to the mitigation operations that are performed via the system 200, the second controller 106 may generate an alert (e.g., the visual alert 140 that is presented on a display at a location in the vehicle 101 or audible alert 142) in the vehicle 101. As noted above, the visual alert 140, as generated by the second controller 106, generally serves to provide early notice to the driver to correct a driving pattern that may be distracting the driver. The audible alert 142, as generated by the second controller 106, generally serves to provide a more active alert (e.g., higher priority alert) to the driver to correct a driving pattern that may be distracting the driver to avoid a collision with another object on the road. Additional mitigation operations that may be selected by the driver and performed by the system 100 may include, shaking the seat back or seat cushion, shaking an area positioned below the driver's feet, activating a cooling fan, providing blinking illumination, start a chat app to start a conversation with a third party or with an artificial intelligence (AI) tool, etc.

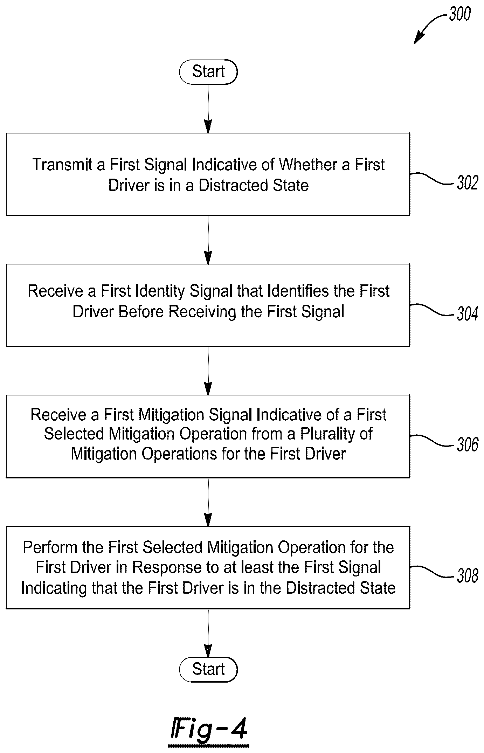

FIGURE 4 depicts a method 300 for monitoring driver behavior and for mitigating driver behavior in accordance with one embodiment.

In operation 302, the plurality of sensors 102 (e.g., the wearable device 130, the mobile device 131, the in-cabin sensors 132, etc.) transmit a first signal indicative of whether a first driver is in a distracted state to the first controller 204.

In operation 304, the first controller 204 is programmed to receive a first driver identity signal (e.g., the user ID information 226) that identifies the first driver before receiving the first signal. It is recognized that first controller 204 may receive the user ID information 226 prior to receiving the first signal from the plurality of sensor 102.

In operation 306, the first controller 204 receives a first mitigation signal (e.g., the user configure mitigate command 210) indicative of a first selected mitigation operation from a plurality of mitigation operations for the first driver.

In operation 306, the first controller 204 and/or the second controller 106 perform the first selected mitigation operation for the first driver in response to at least the first signal indicating that the first driver is in the distracted state. In this case, the first controller 204 and/or the second controller 106 may generate an alert for a display at a location in the vehicle 101. The visual alert 140, as generated by the second controller 106, generally serves to provide early notice to the driver to correct a driving pattern that may be distracting the driver. The audible alert 142, as generated by the second controller 106, generally serves to provide a more active alert (e.g., higher priority alert) to the driver to correct a driving pattern that may be distracting the driver to avoid a collision with another object on the road.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilizes one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A system for monitoring driver behavior, the system comprising:
a plurality of sensors configured to transmit a first signal indicative of whether a first driver is in a distracted state; and
at least one controller programmed to:
receive a first driver identity signal that identifies the first driver before receiving the first signal;
receive a first mitigation signal indicative of a first selected mitigation operation from a plurality of mitigation operations for the first driver; and
perform the first selected mitigation operation for the first driver in response to at least the first signal indicating that the first driver is in the distracted state.

2. The system of claim 1 wherein the at least one controller is further programmed to receive a second driver identity signal that indicates a second driver.

3. The system of claim 2, wherein the at least one controller is further programmed to receive a second signal indicative of whether the second driver is in a distracted state.

4. The system of claim 3, wherein the at least one controller is further programmed to receive a second mitigation signal indicative of a second selected mitigation operation from the plurality of mitigation operations for the second driver.

5. The system of claim 4, wherein the first selected mitigation operation is different from the second selected mitigation operation.

6. The system of claim 4, wherein the at least one controller is further programmed to perform the second selected mitigation operation for the second driver in response to at least the second signal indicating that the second driver is in the distracted state.

7. The system of any preceding claim, wherein the at least one controller is further programmed to compare a number of instances in which the first driver is detected to be in the distracted state to a first predetermined value prior to performing the first selected mitigation operation for the first driver.

8. The system of claim 7, wherein the at least one controller is further programmed to perform the first selected mitigation operation for the first driver in response to the number of instances in which the first driver is detected to be in the distracted state is greater than the first predetermined value.

9. The system of claim 8, wherein the at least one controller is further programmed to compare the number of instances in which the first driver is detected to be in the distracted state to a second predetermined value in response the number of instances being less than the first predetermined value.

10. The system of claim 9, wherein the first predetermined value is different than the second predetermined value.

11. The system of claim 9, wherein the at least one controller is further programmed to perform a second selected mitigation operation in response to the number of instances in which the first driver is detected to be in the distracted state is greater than the second predetermined value and preferably the first selected mitigation operation is different than the second selected mitigation operation.

12. A method for monitoring driver behavior, the method comprising:
transmitting a first signal indicative of whether a first driver is in a distracted state;
receiving by at least one first controller, a first driver identity signal that identifies the first driver before receiving the first signal;
receiving a first mitigation signal indicative of a first selected mitigation operation from a plurality of mitigation operations for the first driver; and
performing the first selected mitigation operation for the first driver in response to at least the first signal indicating that the first driver is in the distracted state.

13. The method of claim 12 further comprising at least one of the following:
receiving a second driver identity signal that indicates a second driver,
receiving a second signal indicative of whether the second driver is in a distracted state,
receiving a second mitigation signal indicative of a second selected mitigation operation from the plurality of mitigation operations for the second driver and preferably comprising performing the second selected mitigation operation for the second driver in response to at least the second signal indicating that the second driver is in the distracted state, and more preferably the first selected mitigation operation is different from the second selected mitigation operation.

14. A computer-program product embodied in a non-transitory computer read-able medium that is programmed and executable by one or more controllers to monitor driver behavior, the computer-program product comprising instructions for:
receiving a first driver identity signal that identifies a first driver for a vehicle;
receiving a first signal indicative of whether the first driver is in a distracted state;
receiving a first mitigation signal indicative of a first selected mitigation operation from a plurality of mitigation operations for the first driver; and
performing the first selected mitigation operation for the first driver in response to at least the first signal indicating that the first driver is in the distracted state.

15. The computer-program product of claim 14 further comprising performing one of providing a visual alert or an audible alert in response to at least the first signal indicating that the first driver is in the distracted state.
